Europäisches Patentamt

European Patent Office

Office européen des brevets

(11) Numéro de publication : **0 097 586**
**B1**

(12) **FASCICULE DE BREVET EUROPÉEN**

(45) Date de publication du fascicule du brevet :
21.01.87

(21) Numéro de dépôt : 83401244.5

(22) Date de dépôt : 16.06.83

(51) Int. Cl.⁴ : **H 02 H 7/085**

(54) **Montage de protection contre les surcharges d'un moteur à courant continu et à champ constant.**

(30) Priorité : 23.06.82 FR 8210967

(43) Date de publication de la demande :
04.01.84 Bulletin 84/01

(45) Mention de la délivrance du brevet :
21.01.87 Bulletin 87/04

(84) Etats contractants désignés :
**DE GB IT SE**

(56) Documents cités :
**DE-A- 2 443 163**
**US-A- 1 489 560**
**US-A- 3 903 457**

(73) Titulaire : **ACIERS ET OUTILLAGE PEUGEOT Société
dite:**
**F-25400 Audincourt (Doubs) (FR)**

(72) Inventeur : **Rudi, Alain**
**2 Rue Collin**
**F-90000 Essert (FR)**
Inventeur : **Peugeot, Michel**
**7 Impasse Degas**
**F-25230 Seloncourt (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

**Description**

La présente invention est relative à un montage de protection contre les surcharges d'un moteur électrique à courant continu et à champ constant, destiné notamment aux applications dans les véhicules automobiles.

Il est largement connu de protéger les moteurs électriques contre les surcharges à l'aide d'éléments à coupure thermique qui sont branchés dans le circuit du moteur à protéger, de façon à être parcouru par le courant absorbé par celui-ci, l'élément réagissant lorsque ce courant atteint un seuil dangereux prédéterminé.

Cet élément à coupure thermique est alors capable d'ouvrir le circuit du moteur, en général par échauffement d'un bilame ou autre organe analogue.

Ces éléments à coupure thermique ont un inconvénient dans certaines applications, car leur temps de réaction est relativement long et le moteur n'est donc coupé qu'un certain temps après que le courant atteint la valeur dangereuse. Par ailleurs, ces éléments ont besoin d'un certain temps de rétablissement qui peut être relativement important, de sorte que le circuit du moteur n'est capable de fonctionner de nouveau que lorsque l'élément à coupure thermique a repris son état initial.

Dans certaines applications, ces retards sont intolérables et il en est notamment ainsi lorsqu'il s'agit d'un dispositif d'assistance de direction pour véhicule automobile dans lequel un moteur électrique fournit les forces d'assistance à la colonne de direction. Dans ce cas particulier, il est évidemment totalement inadmissible que le conducteur du véhicule soit privé même temporairement de l'assistance de direction alors qu'il s'attend à ce que cette assistance fonctionne normalement.

Par ailleurs, d'une façon générale, les moteurs électriques entraînant les essuie-glaces sont dimensionnés de façon large afin d'éviter leur détérioration par échauffement en cas de blocage. Il serait donc souhaitable généralement dans ce cas de pouvoir protéger efficacement le moteur contre les surcharges, mais là encore une protection par coupure thermique n'est pas satisfaisante.

Pour éviter les temps de réaction importants des montages de protection à coupure thermique, on a déjà mis au point des circuits dans lesquels le moteur électrique est protégé par un élément résistif qui est branché en série avec le moteur par un organe de commutation commandé par un détecteur de courant qui agit sur cet organe de commutation lorsque le courant dans le moteur prend une valeur dangereuse. Un tel montage est décrit dans EP-A1-0 077 696 déposé le 31 août 1982 au nom de la Demanderesse dans le cadre d'un dispositif d'assistance de direction dans lequel l'effort d'assistance est fourni par un moteur électrique.

Bien que dans ce cas particulier, la protection du moteur soit assurée dans des conditions satisfaisantes, ce montage antérieur utilise des composants électroniques qui sont relativement coûteux et fragiles compte tenu surtout de leur utilisation dans l'environnement d'un véhicule automobile.

Il est connu par ailleurs, d'après US-A-1 489 560, d'utiliser exclusivement des éléments de commande électromagnétique. Dans ce cas, il s'agit d'un montage de protection contre les surcharges d'un moteur à courant continu dans lequel le moteur électrique est connecté en série avec une première bobine de relais et avec un contact interrupteur qui est ouvert par cette première bobine lorsque le courant dans le moteur atteint une valeur jugée dangereuse. Lorsque le contact interrupteur s'est ouvert sous la commande de la première bobine, un courant peut circuler dans un second circuit série connecté en parallèle avec le premier circuit série qui comprend la première bobine et le contact interrupteur. Le second circuit comporte une seconde bobine, bobinée dans le même sens que la première et une résistance.

La seconde bobine est agencée de façon à recevoir un courant circulant à travers le moteur et la résistance après l'ouverture du contact interrupteur pour maintenir ce contact ouvert. La seconde bobine est donc soumise à une tension égale à la tension de la source d'alimentation diminuée de la force contre-électromotrice du moteur (qui diminue rapidement lorsque le contact interrupteur est ouvert) et de la chute de tension dans la résistance.

La seconde bobine est alimentée à travers le moteur et donc un courant doit nécessairement continuer à circuler dans ce dernier après l'ouverture du contact interrupteur. Cependant, ce courant et donc le couple fourni par le moteur est faible étant donné que le circuit série constitué par la seconde bobine et la résistance présente une résistance élevée. Or, on a précisé ci-dessus que dans certains cas, (assistance de direction notamment), un tel maintien de couple, même plus faible est indispensable pour éviter une coupure brutale de l'énergie appliquée sur la chaîne cinématique couplée au moteur. De plus, dans le montage du US-A-1 489 560, il faut nécessairement une intervention manuelle pour que le moteur puisse de nouveau fournir un couple à savoir en actionnant la résistance de démarrage. Sinon, tant que la tension d'alimentation reste appliquée, le contact interrupteur reste ouvert et le moteur ne peut être alimenté par un courant appréciable capable de fournir un couple significatif.

Le montage suivant US-A-1 489 560 comprend également des moyens pour différer l'action desdites bobines pendant la période de démarrage du moteur. Ces moyens comprennent une troisième bobine qui est bobinée de façon à réduire l'action des deux autres bobines. La troisième bobine est alimentée pendant la période de démarrage par l'intermédiaire du rhéostat de démarrage.

DE-A-2 443 163 concerne un montage de protection d'un moteur électrique à courant continu qui, en cas de surcharge du moteur, place ce dernier en série avec une résistance qui limite le courant dans le moteur.

L'invention a pour objet un montage de protection contre les surcharges d'un moteur à courant continu et à champ constant dans lequel le moteur électrique est connecté en série avec une première bobine de relais et avec un contact interrupteur qui est commandé par cette bobine de manière à s'ouvrir pour interrompre ce premier circuit série lorsque le courant dans le moteur atteint une valeur jugée dangereuse, le moteur étant également relié en série avec un second circuit série comprenant une résistance et une seconde bobine qui est associée à la première bobine pour, lorsque cette seconde bobine est excitée, pouvoir maintenir ledit contact interrupteur ouvert, caractérisé en ce que ledit second circuit série est monté en parallèle exclusivement sur ledit contact interrupteur et en ce que ladite seconde bobine ainsi que ladite résistance ont une faible valeur ohmique, de façon que le moteur est parcouru par un courant appréciable capable de fournir un couple significatif lorsque le contact interrupteur est ouvert.

L'invention sera mieux comprise à l'aide de la description qui va suivre, donnée uniquement à titre d'exemple et faite en se référant aux dessins annexés, sur lesquels :

la Figure 1 est le schéma d'un montage suivant l'invention pour la protection d'un moteur électrique destiné à ne tourner que dans un seul sens ;

la Figure 2 montre un montage analogue applicable à un moteur destiné à tourner sélectivement dans les deux sens.

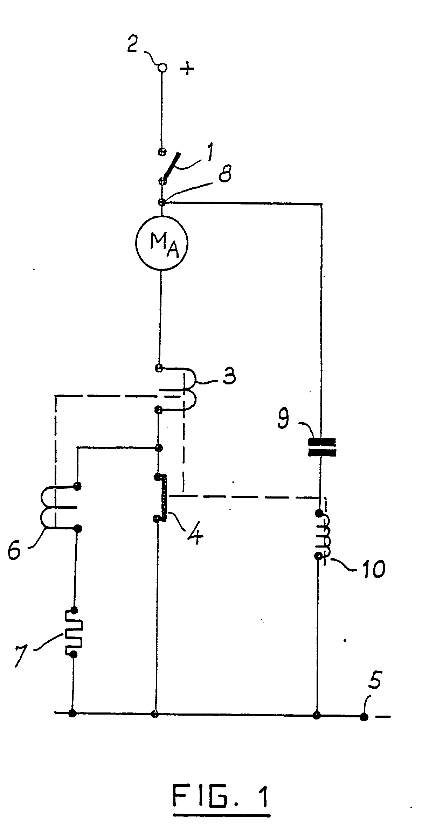

Le montage représenté sur la Fig. 1 est associé à un moteur électrique $M_A$ à courant continu et à champ fixe (au moyen d'aimants permanents) et ce moteur est raccordé à travers un organe de commande marche/arrêt 1 à la borne positive 2 d'une source à courant continu (non représentée) qui peut être la batterie d'un véhicule automobile. Le moteur lui-même peut être utilisé par exemple pour l'entraînement des essuie-glaces ou pour fournir l'assistance de direction.

L'induit du moteur est monté en série avec l'organe de commande marche-arrêt 1 et avec une première bobine 3 formant détecteur de courant, cette bobine étant elle-même raccordée en série avec un organe de commutation 4 du type normalement fermé lorsque la bobine 3 n'est pas excitée. Le contact 4 est relié à la borne négative 5 de la source d'alimentation.

En parallèle, sur le contact 4 sont raccordées en série une seconde bobine 6 de faible valeur ohmique qui est enroulée autour du même mandrin (non représenté) que la bobine 3 et qui peut ainsi agir également sur le contact 4, le sens d'enroulement des bobines 3 et 6 étant tel que leurs champs s'ajoutent lorsqu'elles sont toutes deux excitées.

La bobine 6 est reliée en série avec une résistance chutrice 7 de faible valeur ohmique qui est destinée à réduire le courant circulant dans le moteur $M_A$ dès que la valeur de ce courant dépasse un seuil prédéterminé jugé dangereux tout en permettant de maintenir un certain couple à la sortie du moteur.

La jonction 8 entre l'induit du moteur $M_A$ et l'organe de commande 1 est reliée également à un condensateur 9 connecté à son tour en série avec une troisième bobine 10, elle-même connectée à la borne 5. La troisième bobine 10 est enroulée sur le même mandrin que les bobines 3 et 6, cependant que son sens d'enroulement est opposé à celui de ces dernières, si bien que lorsqu'elle est excitée, son champ est contraire à ceux engendrés par les bobines 3 et 6.

Le fonctionnement du montage que l'on vient de décrire est le suivant.

La valeur de la résistance 7 est choisie de telle manière que lorsqu'elle est raccordée en série avec le moteur $M_A$ (contact 4 ouvert), le courant qui s'établit dans ce circuit prend une valeur qui est non dangereuse vis-à-vis de l'échauffement de ce moteur alors que cette valeur reste suffisante pour maintenir sur l'arbre de sortie de celui-ci un couple suffisamment important. Ce cas peut se présenter par exemple, lorsque le moteur est bloqué par une demande de couple excessive. A titre d'exemple, un cas pratique dans lequel ceci se produit, peut être rencontré dans une application à une direction assistée électrique lorsque la direction se trouve sur une des butées de fin de course et que le conducteur agit sur le volant dans un sens qui tend à confirmer cette mise en butée.

Si le moteur était alors coupé de la tension d'alimentation, il se produirait par suite de la libération des élasticités mécaniques dans la direction, une réaction désagréable sur le volant. Or, cette réaction est ici évitée, car le moteur continue de fournir un couple, certes, plus faible, mais néanmoins suffisant pour éviter cet effet désagréable.

Quant à l'application aux essuie-glaces, l'invention permet de réduire considérablement les dimensions du moteur et de réduire d'autant l'encombrement, le coût et la facilité d'implantation. En outre, en hiver, lorsque l'utilisateur d'un véhicule procède au dégivrage du pare-brise, il peut sans danger mettre les essuie-glaces en marche (couple faible de protection du moteur) et lorsque le dégivrage est suffisant, les balais d'essuie-glace sont décollés facilement sans que le moteur en souffre.

Le contact 4 est normalement fermé lorsque la bobine 3 est parcourue par le courant nominal du moteur $M_A$.

Lorsqu'un couple trop important est demandé à ce moteur, le courant qui le traverse augmente et dans ces conditions, la bobine 3 engendre un champ suffisant pour attirer le contact 4 vers sa position d'ouverture. Il en résulte donc que du fait de la construction de la bobine 3, le courant passant dans le moteur $M_A$ ne peut franchir un certain seuil.

Lorsque ce seuil est effectivement franchi, le contact 4 s'ouvre, mettant ainsi en circuit, avec le moteur, la seconde bobine 6 et la résistance chutrice 7. De ce fait, le courant dans le moteur diminue immédiatement et en l'absence de la bobine 6, ce courant descendrait en dessous du courant de seuil et le contact 4 se refermerait de nouveau. Il en résulterait un fonctionnement oscillatoire du montage. Or, grâce à la présence de la seconde bobine 6, le champ auquel est exposé le contact 4 aura une valeur suffisante, puisque les effets des bobines 3 et 6 s'ajoutent et le contact reste donc ouvert malgré la baisse du courant dans le circuit du moteur. Cependant, les valeurs ohmiques des composants 6 et 7 sont choisies de telle manière que le moteur peut maintenir un certain couple.

Lors de la mise en route du moteur par l'intermédiaire de l'organe de commande marche-arrêt 1, un appel brutal de courant se produit dans le circuit, surtout lorsqu'il s'agit d'un moteur à aimants permanents, auquel l'invention s'applique plus particulièrement. En l'absence du condensateur 9 et de la troisième bobine 10, cet appel de courant aurait pour effet le fonctionnement que l'on vient de décrire et le couple de démarrage du moteur en serait donc d'autant réduit. Pour pallier cet inconvénient, on prévoit le condensateur 9 et la bobine 10 qui ont l'effet suivant sur le montage.

Au repos, le condensateur 9 est déchargé à travers le moteur, la bobine 3, le contact 4 et la bobine 10 et, lorsque l'organe de commande 1 est fermé, le condensateur 9 se charge tout d'abord avec un courant de valeur élevée, qui décroît selon une loi bien connue. Ce courant traverse la bobine 10 qui, comme cela a été précisé précédemment, agit sur le contact 4 en sens inverse par rapport à l'action des bobines 3 et 6. Le contact 4 reste donc fermé tant que le courant dans la bobine 10 est suffisant pour provoquer cette action. Lorsque le condensateur 9 est totalement chargé, la bobine 10 ne peut plus avoir d'influence sur le contact 4 et le montage fonctionne alors comme expliqué précédemment. La valeur du condensateur 9 est donc choisie de manière que son temps de charge soit nettement plus long que la période transitoire correspondant au démarrage du moteur.

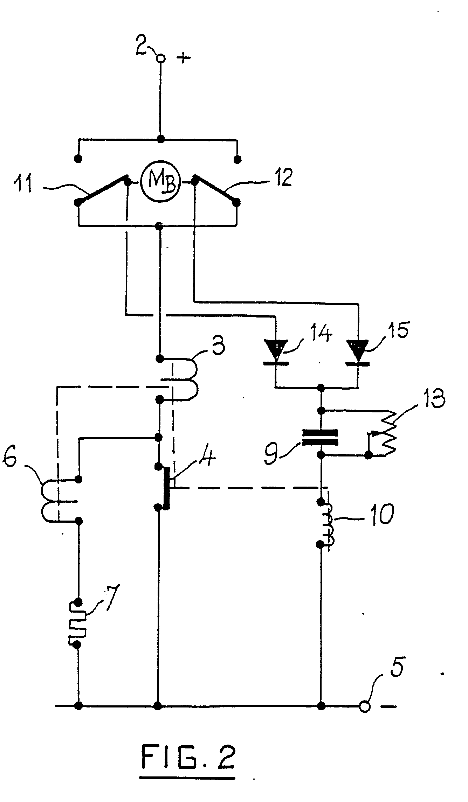

Sur la Fig. 2, on a représenté une variante suivant l'invention qui est destinée à être utilisée avec un moteur $M_B$ destiné à tourner dans les deux sens et qui à cet effet, comporte des organes de commande 11 et 12 d'inversion de polarité, le contact correspondant étant commandé par des relais (non représentés), comme cela est habituel dans la technique. Dans ce cas, le condensateur 9 est mis en parallèle à une résistance de réglage 13, tandis que pour alimenter le condensateur 9, il est prévu deux diodes 14 et 15 raccordées respectivement des deux côtés de l'induit du moteur.

La résistance de réglage 13 permet d'ajuster avec précision l'effet qu'a sur le montage le condensateur 9 pendant la période de démarrage du moteur. En effet, la bobine 10 sera parcourue par un courant faible mais constant pendant tout le fonctionnement du montage et le courant d'appel nécessaire pour charger le condensateur 9 pourra donc être plus faible que dans la première variante décrite ci-dessus.

**Revendications**

1. Montage de protection contre les surcharges d'un moteur à courant continu et à champ constant ($M_A$ ; $M_B$) dans lequel le moteur électrique est connecté en série avec une première bobine de relais (3) et avec un contact interrupteur (4) qui est commandé par cette bobine (3) de manière à s'ouvrir pour interrompre ce premier circuit série (3, 4) lorsque le courant dans le moteur ($M_A$ ; $M_B$) atteint une valeur jugée dangereuse, le moteur étant également relié en série avec un second circuit série (6, 7) comprenant une résistance (7) et une seconde bobine (6) qui est associée à la première bobine (3) pour, lorsque cette seconde bobine (6) est excitée, pouvoir maintenir ledit contact interrupteur (4) ouvert, caractérisé en ce que ledit second circuit série (6, 7) est monté en parallèle exclusivement sur ledit contact interrupteur (4) et en ce que ladite seconde bobine (6) ainsi que ladite résistance (7) ont une faible valeur ohmique, de façon que le moteur ($M_A$ ; $M_B$) est parcouru par un courant appréciable capable de fournir un couple significatif lorsque le contact interrupteur (4) est ouvert.

2. Montage suivant la revendication 1, caractérisé en ce qu'il est prévu en outre des moyens de temporisation (9, 10, 13) pour différer l'action desdites première et seconde bobines (3, 6) pendant la période de démarrage dudit moteur ($M_A$ ; $M_B$).

3. Montage suivant la revendication 2, caractérisé en ce que lesdits moyens de temporisation (9, 10, 13) pour différer l'action desdites première et seconde bobine (3, 6) comprennent une troisième bobine (10) enroulée sur le même support que les première et seconde bobines (3, 6) avec un sens d'enroulement contraire à celui de ces dernières, cette troisième bobine (10) étant raccordée en série avec un condensateur (9) aux bornes du montage.

4. Montage suivant la revendication 3, caractérisé en ce qu'une résistance de réglage (13) est montée aux bornes dudit condensateur (9).

**Claims**

1. Circuitry for protecting against overloads of a DC motor having a constant field ($M_A$ ; $M_B$) in which the electric motor is connected in series with a first relay coil (3) and with a make-break switch (4) which is controlled by this coil (3) in such manner as to open for breaking this first series circuit (4) when the current of the motor ($M_A$ ; $M_B$) reaches a value which is considered dangerous, the motor also being connected in series with a second series circuit (5, 7) comprising a resistor (7) and a second coil (6) which is associated with the first coil (3) so as to, when this second coil (6) is excited, be capable of maintaining said make-break switch (4) open, characterised in that said second series circuit (6, 7) is connected in parallel exclusively with make-break switch (4) and said second coil (6) and said resistor (7) have a low ohmic value, whereby an appreciable current passes through the motor ($M_A$ ; $M_B$) which is capable of producing a significant torque when the make-break switch (4) is open.

2. Circuitry according to claim 1, characterised in that it further comprises time delay means (9, 10, 13) for delaying the action of said first and second coils (3, 6) during the starting up period of said motor ($M_A$ ; $M_B$).

3. Circuitry according to claim 2, characterised in that said time delay means (9, 10, 13) for delaying the action of said first and second coils (3, 6) comprise a third coil (10) wound on the same support as the first and second coils (3, 6) with a direction of winding the opposite of that of the last-mentioned coils, this third coil (10) being connected in series with a capacitor (9) to the terminals of the circuitry.

4. Circuitry according to claim 3, characterised in that a regulating resistor (13) is connected to the terminals of said capacitor (9).


**Patentansprüche**

1. Anordnung zum Überlastschutz eines Gleichstrommotors mit konstantem Feld ($M_A$ ; $M_B$), bei welcher der Elektromotor in Reihe geschaltet ist mit einer ersten Relaiswicklung (3) und einem Relaiskontakt (4), welcher von dieser Relaiswicklung (3) so gesteuert ist, daß er diesen Reihenstromkreis (3, 4) unterbricht, wenn der Strom des Motors ($M_A$ ; $M_B$) einen kritischen Wert erreicht, wobei der Motor zusätzlich mit einem zweiten Reihenstromkreis (6, 7) in Reihe geschaltet ist, der einen Widerstand (7) und eine zweite Relaiswicklung (6) umfaßt, welche mit der ersten Wicklung (3) verbunden ist, um bei Erregung der zweiten Relaiswicklung (6) den Relaiskontakt (4) geöffnet zu halten, dadurch gekennzeichnet, daß der zweite Reihenstromkreis (6, 7) ausschließlich parallel zu dem Relaiskontakt (4) geschaltet ist und daß die zweite Relaiswicklung (6) sowie der Widerstand (7) einen geringen Ohm'schen Widerstand aufweisen, so daß der Motor ($M_A$ ; $M_B$) bei geöffnetem Relaiskontakt (4) von einem Strom erheblicher Stärke durchflossen ist, welcher ein beträchtliches Drehmoment erzeugt.

2. Anordnung nach Anspruch 1, dadurch gekennzeichnet, daß Zeitverzögerungsmittel (9, 10, 13) vorhanden sind, die beim Anlassen des Motors ($M_A$ ; $M_B$) die Erregung der ersten und der zweiten Relaiswicklung (3, 6) verzögern.

3. Anordnung nach Anspruch 2, dadurch gekennzeichnet, daß die Zeitverzögerungsmittel (9, 10, 13) für die erste und die zweite Relaiswicklung (3, 6) eine dritte Wicklung (10) umfassen, welche auf denselben Träger aufgewickelt ist wie die erste und die zweite Relaiswicklung (3, 6), jedoch mit entgegengesetztem Windungssinn zu den beiden letzteren, wobei diese dritte Relaiswicklung (10) mit einem Kondensator (9) in Reihe zu den Anschlußklemmen der Anordnung geschaltet ist.

4. Anordnung nach Anspruch 3, dadurch gekennzeichnet, daß an den Anschlußklemmen des Kondensators (9) ein Regelwiderstand (13) angeschlossen ist.

FIG. 1

FIG. 2